# EUROPEAN PATENT APPLICATION

(11) **EP 1 315 108 A2**
(43) Date of publication of application: **28.05.2003**
(21) Application number: 02025697.0
(22) Date of filing: 20.11.2002
(51) Int. Cl.: G06F 17/60

(54) **System apparatuses and computer program for protecting personal attributes information**

(30) Priority: 21.11.2001 JP 2001356566; 03.09.2002 JP 2002257532
(71) Applicant: MATSUSHITA ELECTRIC INDUSTRIAL CO., LTD., Kadoma-shi, Osaka 571-8501 (JP)
(72) Inventor: Kageyama, Mitsuhiro, Tachikawa-shi, Tokyo 190-0032 (JP); Tsurubayashi, Ken, Tokyo 125-0061 (JP); Sato, Mitsuhiro, Kanagawa 243-0216 (JP); Suzuki, Hiroyuki, Kawasaki-shi, Kanagawa 211-0041 (JP); Uranaka, Sachiko, Tokyo 113-0021 (JP)
(74) Representative: Grünecker, Kinkeldey, Stockmair & Schwanhäusser Anwaltssozietät

(57) **Abstract**

Disclosed is a system for protecting personal attributes information (PAI) to inhibit unauthorized use of personal information disclosed on the network and protect the disclosed information. The system comprises: a terminal apparatus including PAI managing means to generate and manage customer's attributes information, and PAI protecting means to modify changeable items of the customer's attributes information to be transmitted to a destination across a network in such a manner as to make different changes for different destinations; and a center apparatus which offers services in a manner refined by using customer's attributes information received from the terminal apparatus. Even if a personal information leak occurred, defensive action can be taken promptly by discarding the e-mail address disclosed to the information leaker without changing the e-mail address in ordinary use. The information leaker can be traced from the leaked e-mail address and dealt with warningly afterward.

## Description

### BACKGROUND OF THE INVENTION

### Field of the Invention

The present invention relates to a system for protecting personal attributes information, which is intended to protect personal information, and apparatuses and a computer program for realizing such system. In particular, the invention is intended to inhibit unauthorized use of personal information or the like that a customer disclosed in order to get a service on a network.

### Description of Prior Art

In recent years, with the advance of the Internet technology, the environment for carrying out Electronic Commerce (abbreviated to EC, hereinafter) via a network has been well set up. Accordingly, the EC has come into popular use as a means for usual trading of goods and consumers widely use it to buy commodities, tickets, music content, and others. In the near future, when broadband usage of the Internet and all-the-time connection to a network will become advanced options, even more increasing consumers are expected to take advantage of the EC.

In conventional EC systems, for example, as described in Japanese Unexamined Patent Publication No. 2001-222586, a commercial Internet service provider stores and manages customer-specific information about customers' interests and liking and customers' purchase records as well as customer management data such as the addresses and names of the consumers . Such information, once stored, is referenced when the commercial Internet service provider pushes recommended commodities to their customers to give a customer information about commodities supposed to suit the customer's taste, aiming at increase in sales.

The customer management data is information entered by a person from his or her terminal's user interface screen when he or she visits a commercial Internet service provider's virtual store and registers as a customer member with the virtual store. The above information comprises the customer's address, name, point of contact, age, sexuality, ID, password, year/month/day of registration, credit card number, expiration date of the credit card, information about the terminal device that the customer uses, etc. On the service provider's server, the entered information is stored and managed in a database (DB). The interest and liking information is obtained when the customer fills out a questionnaire when registering with the virtual store. For instance, this information is whether the customer is interested in categorized items: e.g., health, food, restaurants, wine, sake, fashions, stylish clothes, brand-name goods, up-to-date electronics, music, pictures, etc. The information about the customer's purchase in the past is the data on the past purchase by the customer at the virtual store. These kinds of information is also stored and managed in a DB on the service provider's server.

The customer personal information entered by a customer from his or her terminal device is encrypted and transmitted to the service provider's server on the Internet and care is taken so that the information will not be stolen by a third party during the transmission.

However, the conventional EC systems take no measures to prevent someone from making bad use of the customer personal information after the information is delivered to the EC service provider. Accordingly, it is possible to trade customers' personal information between EC service providers and, in consequence, such a problem arises that so-called "Spam" e-mail or direct e-mail from an unacquainted EC service provider arrives at customers' terminals.

Through the use of peer-to-peer file exchange, lately, people exchange personally created content of music, picture, and the like each other via the Internet without intervention of a server. This poses a problem that exchanged content is passed to a third party without permission of the content creator.

With the prospect of the future situation where broadband usage of the Internet and all-the-time connection to a network will become advanced options, the present inventors propose a method in which personal information (personal attributes information) is stored on the terminal of a customer and the customer discloses the stored personal attributes information to the appropriate server when the customer is going to get an EC service or the like. The proposed method would enhance the quality of a service using the network and help people to take advantage of such service. By this method, for example, even a customer who is a first-time visitor to a virtual store can get a satisfactory service that takes account of his or her preference knowable from the customer's personal information provided when the customer is getting the service. On the other hand, commercial Internet service providers can collect customers' personal information effectively.

For practical use of the above method, it is important to take measures to prevent personal information or the like that was disclosed by a customer from being used dishonestly by the party that gets the information.

### SUMMARY OF THE INVENTION

In a system for protecting personal attributes information (abbreviated to PAI, hereinafter), according to one aspect of the present invention, essentially, at least, a terminal apparatus and a center apparatus exist. The terminal apparatus includes a PAI generating and managing means to generate and manage customer's attributes information and a primary PAI protecting means to modify changeable items of the customer's attributes information to be transmitted to a destination across a network in such a manner as to make different changes of the items for different destinations. The center apparatus offers services in a manner refined by making good use of the customer's attributes information received from the terminal apparatus.

If the above system is built including a plurality of center apparatuses and a plurality of terminal apparatuses, and if the party that runs a center apparatus leaked a customer's PAI received from a terminal apparatus out to a third party, the customer, or the terminal user can trace the information leaker and its center apparatus by looking up the recorded modifications made to the PAI stored on the terminal apparatus.

According to another aspect of the invention, a system for protecting PAI comprises: a terminal apparatus including a PAI generating and managing means to generate and manage customer's attributes information, and a means for setting conditions on using PAI to set conditions on using the customer's attributes information and attach the conditions to the customer's attributes information to be transmitted to a destination across a network; and a center apparatus including a server which offers services in a manner refined by making good use of the customer's attributes information received from a terminal apparatus, and a means for managing others' attributes information to restrict the use of PAI received across the network, subject to the conditions set on using the PAI, attached thereto.

According to another aspect of the invention, the system comprises : a first terminal apparatus including a PAI generating and managing means to generate and manage customer's attributes information, and a means for setting conditions on using PAI to set conditions on using the customer' s attributes information and attach the conditions to the customer's attributes information to be transmitted to a destination across a network; and a second terminal apparatus including a means for managing others' attributes information to restrict the use of PAI received across the network, subject to the conditions set on using the PAI, attached thereto.

By building the system in this way, the use of PAI can be restricted and protecting PAI can be achieved.

According to another aspect of the invention, a terminal apparatus includes a PAI generating and managing means to generate and manage customer's attributes information containing profile information which includes customer's e-mail address, name, and address information or preference information which includes information about customer's liking; and a primary PAI protecting means to modify changeable items of the customer's attributes information to be transmitted to a destination across a network in such a manner as to make different changes for different destinations. The primary PAI protecting means modifies the customer's attributes information, subject to preset conditions of modifying PAI.

By configuring each terminal apparatus in the system in this way, if a recipient of customer's attribute information leaked the information, the information leaker can be traced in the way described above and dealt with warningly afterward.

According to another aspect of the invention, a terminal apparatus includes a PAI generating and managing means to generate and manage customer's attributes information containing profile information which includes customer's e-mail address, name, and address information or preference information which includes information about customer's liking; and a secondary PAI protecting means to protect the customer's attributes information, according to conditions set on using the customer's attributes information for restricted use. The secondary PAI protecting means comprises: a means for setting conditions on using PAI to manage conditions of using the customer's attributes information for restricted use by a recipient of the information, set conditions on using the customer's attributes information, and attach the conditions to the customer's attributes information to be transmitted to a destination across a network; a means for judging if PAI received from the external is usable by the conditions set on using the information, attached thereto; and a means for managing others' attributes information to store and manage PAI information to be used conditionally, received from the external, and restrict the use of PAI, according to the judgment made by the judging means.

By configuring each terminal apparatus in the system in this way, the customer using a terminal can protect his or her attributes information by putting bounds to the use of the information. On the other hand, the customer restricts the use of received PAI, subject to the conditions set on using the PAI, attached thereto.

According to another aspect of the invention, a terminal apparatus includes a content managing means to manage content received from the external and content created by the terminal user separately, and a personal content protecting means to protect content, according to conditions set on using the content for restricted use. The personal content protecting means comprises: a means for setting conditions on using personal content to manage conditions of using content created by the terminal user for restricted use of the content by its recipient, set conditions on using the content, and attach the conditions to the content to be transmitted to a destination across a network; and a means for judging if received content is usable by the conditions set on using the content, attached thereto. The content managing means restricts the use of received content to be used conditionally, according to the judgment made by the judging means.

By configuring each terminal apparatus in the system in this way, content to be exchanged across a network can be protected by setting conditions on using the content and attaching the conditions thereto.

According to another aspect of the invention, a center apparatus includes a secondary PAI protecting means to protect customer's attributes information, according to conditions set on using the customer's attributes information for restricted use. The secondary PAI protecting means comprises: a means for setting conditions on using PAI to manage conditions of using PAI to be transmitted to a destination for restricted use by a recipient of the information, set conditions on using the PAI, and attach the conditions to the PAI to be transmitted to a destination across a network; a means for judging if customer's attributes information received from the external is usable by the conditions set on using the information, attached thereto; and a means for managing others' attributes information to store and manage customer's attributes information to be used conditionally, received from the external, and restrict the use of the customer's attributes information, according to the judgment made by the judging means.

By configuring each center apparatus in the system in this way, even when customer's attributes information is disclosed to a center apparatus, it can be protected by setting conditions on using it and attaching the conditions to it.

According to another aspect of the invention, a computer program is built for controlling a computer of a terminal apparatus which includes a PAI generating and managing means to generate and manage customer's attributes information. The computer program causes the computer to perform the following steps: determining whether a particular destination to which the customer's attributes information will be transmitted is recorded as a trustworthy destination within the customer's attributes information; unless the destination is recorded as a trustworthy destination, selecting an e-mail address not in use out of a plurality of e-mail addresses recorded within the customer's attributes information or generating a new e-mail address of the customer for temporary use; replacing the e-mail address in current use within the customer's attributes information by the selected e-mail address or the newly generated e-mail address; if the destination is recorded as a trustworthy destination, searching for an e-mail address of the customer included in the customer's attributes information transmitted to the same destination in the past; and replacing the e-mail address in current use within the customer's attributes information by the thus searched out e-mail address.

By implementing the above steps, even if a personal information leak occurs, defensive action can be taken promptly by discarding the e-mail address disclosed to the information leaker without changing the e-mail address in ordinary use . The information leaker can be traced from the leaked e-mail address and dealt with warningly afterward.

According to another of the invention, a computer program is built for controlling a computer of a terminal apparatus or a center apparatus. The computer program causes the computer to perform the step of setting conditions on using customer's or personal attributes information and attaching the conditions to the customer's or personal attributes information to be transmitted to a destination across a network, or to perform the following steps: managing personal or customer's attributes information to be used conditionally, received from the external and, when a request is made to use received personal or customer's attributes information, judging if the requested use fulfills the conditions set on using the personal or customer's attributes information, attached thereto, and permitting the use of the personal or customer's attributes information if the conditions are fulfilled.

In this way, conditions are set on using personal information and attached to the information to be transmitted across a network and its recipient uses it, subject to the set conditions. Thereby, personal information disclosed on the network can be protected.

It is an object of the invention to overcome the above-mentioned problems of the prior art and to provide a system for protecting PAI, the system making it possible to inhibit unauthorized use of personal information disclosed on a network and protect the disclosed information. It is another object of the invention is to provide apparatuses and a computer program for realizing such system.

The foregoing objects and the advantages of the present invention will be more apparent from the following description of preferred embodiments with reference to the accompanying drawings.

### BRIEF DESCRIPTION OF THE DRAWINGS

FIG. 1 is a diagram showing a configuration of a system for protecting PAI according to a preferred Embodiment 1 of the present invention.
FIG. 2 is a diagram showing a configuration of a terminal apparatus according to Embodiment 1 of the invention.
FIG. 3 is a table listing exemplary profile information according to Embodiment 1 of the invention.
FIG. 4 is a table listing exemplary preference information according to Embodiment 1 of the invention.
FIG. 5 is an example of a modification management table according to Embodiment 1 of the invention.
FIG. 6 is a table listing another exemplary profile information according to Embodiment 1 of the invention.
FIG. 7 is a diagram showing another configuration of a terminal apparatus according to Embodiment 1 of the invention.
FIG. 8 is a diagram showing another configuration of a system for protecting PAI according to Embodiment 1 when change is made to the network address and terminal name of a terminal apparatus.
FIG. 9 is a table listing another example of a modification management table according to Embodiment 1 when change is made to the network address and terminal name of a terminal apparatus.
FIG. 10 is a table listing a further exemplary profile information according to Embodiment 1 of the invention.
FIG. 11 is a table of a trustworthiness evaluation list available from a third-party organization.
FIG. 12 is a diagram showing a configuration of a system for protecting PAI according to a preferred Embodiment 2 of the present invention.
FIG. 13 is a diagram showing a configuration of a center apparatus according to Embodiment 2 of the invention.
FIG. 14 is a diagram showing a configuration of a terminal apparatus according to Embodiment 2 of the invention.
FIG. 15 is a table listing PAI to which conditions set on using the information is attached.
FIG. 16 is a table listing exemplary conditions to be set on PAI.
FIG. 17 is a diagram showing a configuration of a system for protecting PAI according to a preferred Embodiment 3 of the present invention.
FIG. 18 is a diagram showing a configuration of a terminal apparatus according to Embodiment 3 of the invention.

### DESCRIPTION OF THE PREFERRED EMBODIMENTS

### (First Embodiment)

According to a preferred Embodiment 1 of the present invention, a system for protecting personal attributes information (PAI) is intended to inhibit the leak of personal information by nullifying doing such leak. As a result, protecting personal information is achieved. This system for protecting PAI will now be described.

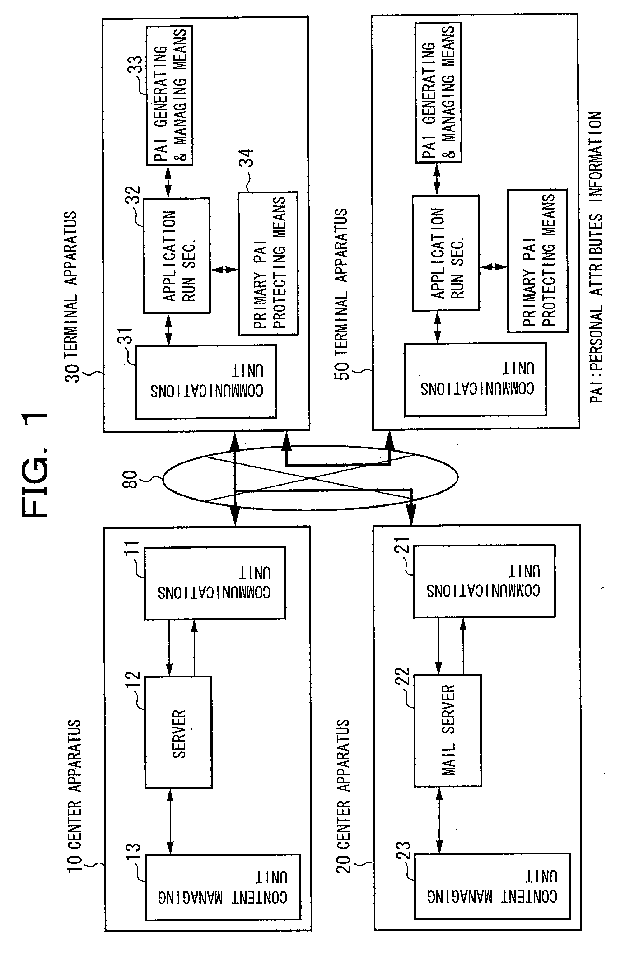

As is shown in FIG. 1, a terminal apparatus 30 which is a constituent part of this system comprises a communications unit 31 responsible for communication over a network 80, an application run section 32 which runs applications such as a browser and mailer, a PAI generating and managing means 33 which generates and manages personal information, and a primary PAI protecting means 34 which is intended to protect the personal information to be disclosed. The configuration of a terminal apparatus 50 is the same as described for the terminal apparatus 30. As these terminal apparatuses 30 and 50, set top boxes (STB) connected to a television for the purpose of taking advantage of a bidirectional service via communications lines such as CATV cables, the Internet, and digital broadcast channels may be used. Moreover, personal computers, cellular mobile phones, mobile terminals, etc. may be used.

A center apparatus 10 is the one run by a commercial Internet service provider that offers EC and content distribution services. The center apparatus 10 comprises a communications unit 11 responsible for communication over the network 80, a server 12 which executes EC and content distribution services, and a content managing unit 13 which manages the contents to be distributed.

A center apparatus 20 is the one run by a commercial Internet service provider that offers e-mail services. The center apparatus 20 comprises a communications unit 21 responsible for communication over the network 80, a mail server 22 which executes e-mail services, and a content managing unit 23 which manages the contents to be distributed.

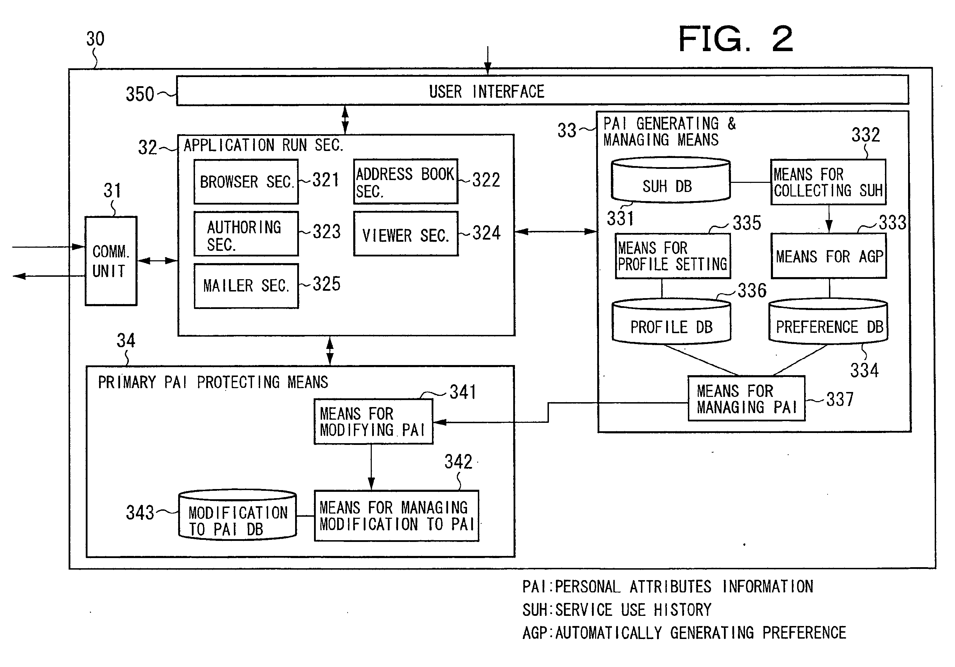

FIG. 2 shows a further detailed configuration of the terminal apparatus 30. The application run section 32 comprises a browser section 321 which reads ML text or the like received via the Internet or a data broadcast channel and draws and shows the content described in the text, an authoring section 323 which allows the user to edit sound, motion video, and still video data and create content, a mailer section 325 responsible for e-mail transmission and reception, an address book section 322 responsible for creating and managing an address book, and a viewer section 324 which displays video images. These sections receive commands entered by the terminal user via an user interface 350.

The PAI generating and managing means 33 stores and manages customer's attributes information that consists of profile information for identifying the customer and preference information representing the liking disposition of the customer. The profile information comprises the customer's address, name, sexuality, birthday, handle name, e-mail address, etc. The preference information comprises the customer's interests, goods of his or her liking, categories of his or her liking, commercial Internet service providers of his or her liking (e.g., EC sites he or she often visits), etc.

The PAI generating and managing means 33 includes a service use history DB 331 in which the customer's service use history data is stored. This data concerns the past customer's activity with the terminal apparatus 30; that is, what broadcasts and how many he or she watched, what Web sites and how many he or she accessed, what EC services and how many he or she used, and how many he or she transmitted and received e-mail. Moreover, the PAI generating and managing means 33 includes the following: a means for collecting service use history data 332 to collect the customer's service use history data from the service use history DB 331; a means for automatically generating preference 333 to analyze the collected customer's service use history data, infer his or her liking, and generate preference information; a preference DB 334 in which the thus generated preference information is stored; a means for profile setting 335 to receive and save profile information entered by the customer (terminal user); a profile DB 336 in which the profile information is stored; and a means for managing PAI 337 to combine the profile information and the preference information into the customer's attributes information and manage and output the PAI by request from the external.

The functions of the above constituent parts of the terminal apparatus are implemented by making the internal computer of the terminal apparatus perform processing steps coded by a program.

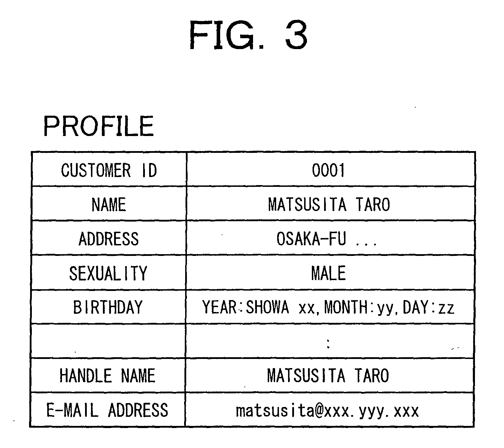

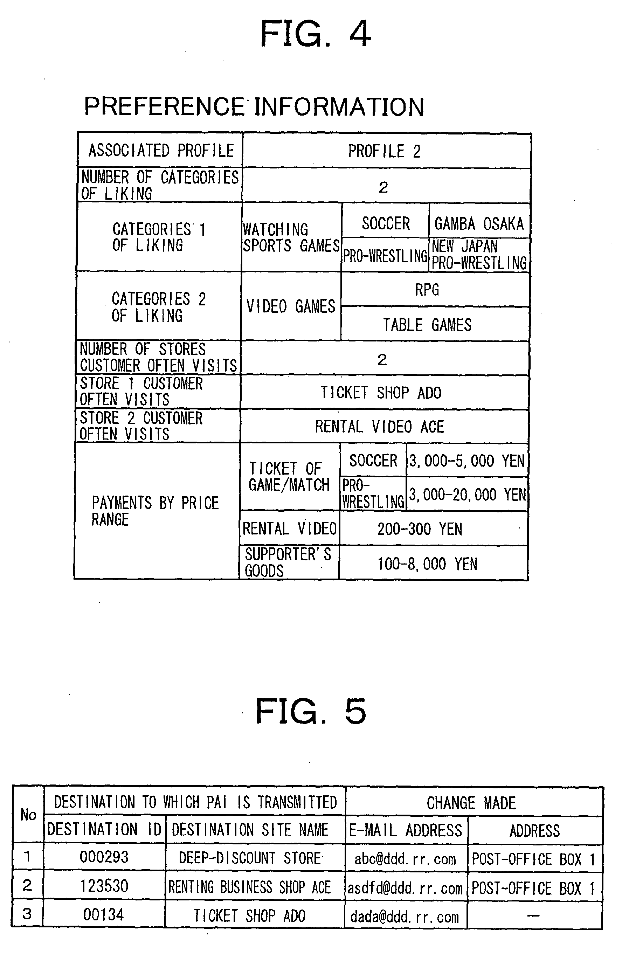

FIG. 3 illustrates an example of the profile information. FIG. 4 illustrates an example of the preference information. The preference information comprises associated profile information and the entries specified for the number of categories of liking, what is under each category of liking, the number of stores the customer often visits and the names of the stores, payments by price range.

The primary PAI protecting means 34 modifies the e-mail address, the customer's address, and other profile information, if necessary, when the terminal apparatus outputs the customer's attributes information to the external. The primary PAI protecting means 34 comprises a means for modifying PAI 341 to modify the customer's attributes information, a means for managing modification to PAI 342 to manage the modification to the PAI, and a modification to PAI DB 343 in which the modification to the PAI is stored.

Then, the operation of the terminal apparatus 30 will be described. In the following, by way of illustration, when a person (customer) gets an EC service, using the terminal apparatus 30, how the terminal apparatus works will be explained.

First, the customer accesses an EC site and decides to buy some content or commodity. The customer enters necessary items (for example, the commodity to buy and its quantity) except his or her PAI and presses or clicks the Submit button or the like.

Then, the internal components of the terminal apparatus 30 perform the following steps of processing.
(1) The browser section 321 sends a request for modifying the customer's attributes information to the primary PAI protecting means 34. This request for modifying the customer's attributes information includes the destination to which the PAI will be transmitted and the items of the customer's attributes information to transmit (the customer's address, name, etc.).
(2) When the primary PAI protecting means 34 receives the request for modifying the customer's attributes information, the means for modifying PAI 341 sends a request for retrieving the customer's attributes information to the means for managing PAI 337.
(3) The means for managing PAI 337 retrieves the customer's profile and preference information from the profile DB 336 and the preference DB 334 and sends that information to the means for modifying PAI 341.
(4) The means for modifying PAI 341 judges whether the destination to which the PAI will be transmitted is trustworthy. An EC site that the customer accessed frequently in the past is regarded as being trustworthy. Referring to the preference information, if the EC site that the customer is accessing now is one of the "stores the customer often visits," the EC site is judged "trustworthy" as the destination to which the PAI will be transmitted. If not, the destination EC site is judged "non-trustworthy."
(5) If the means for modifying PAI 341 judged the destination EC site "non-trustworthy," it modifies the customer's attributes information to transmit. This modification changes changeable items of the profile information and change is made as follows:
   - Change the customer's e-mail address to another address that is not in use, following a procedure which will be described later.
   - If the customer has his or her post-office box, change the customer's address to the post-office box number (if not, the customer's address remains as is).
   - For the payment method, change electronic settlement, if predetermined, to payment into the appointed bank account, payment from the customer's bank account (account number), or payment through the customer's credit card (card number).

   From the change made, the means for managing modification to PAI 342 creates a modification management table which is illustrated in FIG. 5, in which every change made is entered, associated with each destination to which the PAI is transmitted. This table is stored into the modification to PAI DB 343 and managed.
(6) When the destination EC site was judged "trustworthy" in the step (4), the means for managing modification to PAI 342 retrieves the e-mail address, the customer's address, etc. that were transmitted at the past transmission of the PAI to the same destination from the modification management table managed by it.
(7) The primary PAI protecting means 34 transmits the customer's attributes information obtained in the step (5) or (6) to the destination EC site via the browser.

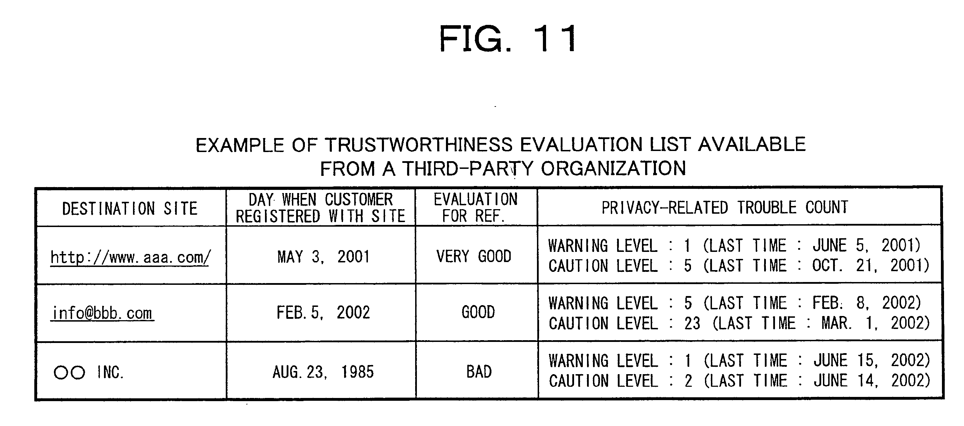

Judging whether the destination EC site to which PAI will be transmitted is "trustworthy" in the step (4) may be performed, referring to a list of evaluating the trustworthiness of each destination site, obtained from a third-party organization. An example of this list is illustrated in FIG. 11.

In the step (6), the changeable items of the customer's attributes may be changed as described for the step (5) if change is preferable to retrieving the same items as transmitted in the past.

Changing the e-mail address can be performed in the following three manners.

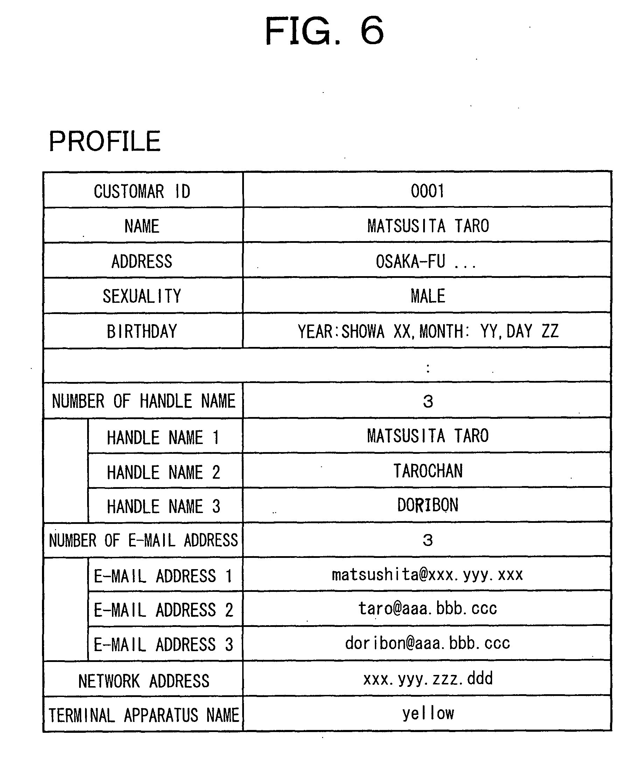

In the first manner, the mail server 22 of the center apparatus 20 assigns in advance a plurality of e-mail addresses to one customer and manages thee-mail addresses. In this case, a plurality of handle names and a plurality of e-mail addresses are registered in the profile information table of the customer's attributes information as is illustrated in FIG. 6. The primary PAI protecting means 34 sets at least one of the plurality of e-mail addresses as the one to be ordinarily used by the customer, or the terminal user. The user opens this e-mail address to his friends and acquaintances online or offline so that communication with them will be performed, using that e-mail address.

The remaining e-mail addresses are managed by the means for modifying PAI 341 as possible replacements when modification to PAI is made. When the customer's e-mail address is made open to a commercial Internet service provider or a person whom the customer got to know on the net, but does not see him or her, the means for modifying PAI 341 discloses an e-mail address which is different from the one for ordinary communication and automatically assigned out of the e-mail addresses managed by it in the personal e-mail address mailbox. In this case, e-mail address change is made by selecting one of the plurality of e-mail addresses included in the customer's attributes information.

In the second manner, the customer, or the terminal user has at least one e-mail address for ordinary communication use on the terminal apparatus 30 and opens this address to his or her friends and acquaintances online or offline. Whenever the customer's e-mail address is made open to a commercial Internet service provider or a person whom the customer got to know on the net, but does not see him or her, the means for modifying PAI 341 generates a suitable e-mail address to be assigned to the customer, which is set in the personal e-mail address mailbox, and discloses this e-mail address. At this time, the terminal apparatus notifies the mail server 22 of a new account that has now been created.

Having received this notification, the mail server validates the e-mail address including the new account that it was informed from the terminal apparatus 30.

In the third manner, the customer, or the terminal user has at least one e-mail address for ordinary communication use on the terminal apparatus 30 and opens this address to his or her friends and acquaintances online or offline. Whenever the customer's e-mail address is made open to a commercial Internet service provider or a person whom the customer got to know on the net, but does not see him or her, the means for modifying PAI 341 requests the mail server 22 to issue a temporary e-mail address. Having received this request, the mail server 22 assigns a temporary e-mail address to the terminal apparatus 30. The means for modifying PAI 341 sets the temporary e-mail address assigned by the mail server 22 in the personal e-mail address mailbox and discloses it to the commercial Internet service provider or the like.

In the second and third manners, e-mail address change is made by changing the e-mail address included in the customer's attributes information to the newly set e-mail address.

The e-mail address for modifying PAI by the above manners may have a set expiration date.

The e-mail address for modifying PAI may be obtained from each mail server run by a plurality of commercial Internet service providers.

Also, the e-mail address for modifying PAI can be deleted at any time as required by the terminal apparatus.

Meanwhile, when the mailer section 325 of the terminal apparatus 30 receives e-mail from the mail server 22, it refers to the modification management table managed by the means for managing modification to PAI 342, gets from the table all accounts set in the personal e-mail address mailbox of the customer, or the terminal user, and receives, at a time, all e-mail messages addressed to the accounts from the mail server 22.

If Spam mail to a particular e-mail address of the customer has arrived, the terminal apparatus configured as described above enables its user to delete that e-mail address promptly. Because different e-mail addresses of the customer are disclosed to different parties that are destinations to which PAI was transmitted, if, for example, an e-mail address # (for example, usr10005@aaa.net) is disclosed to party A and the arrival of an e-mail message to the same address "usr10005@aaa.net" from party B occurs, it can be inferred that party A probably leaked the customer's information to parity B. Thus, the customer can know that greatest care should be needed when communicating with party A afterward.

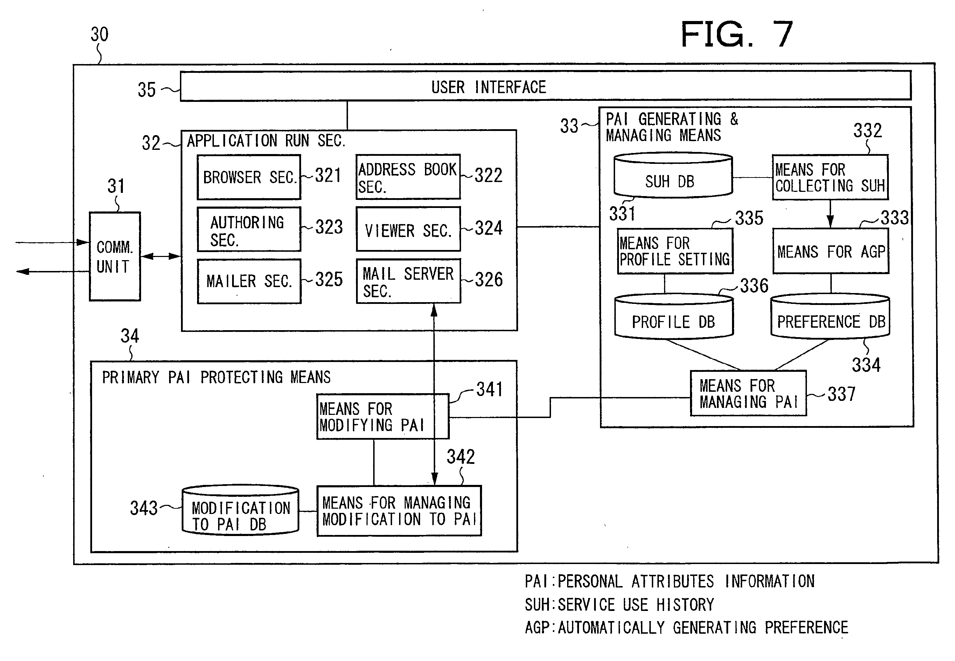

In the above-described illustrative case of implementation, the personal e-mail address mailbox of the customer is set up on the external mail server. However, in some other implementation, it is possible to incorporate a mail server section 326 that implements the mail server function into the terminal apparatus 30, as is shown in FIG. 7, so that the personal e-mail address mailbox can be operated independent of the external mail server.

In the above-described illustrative case of implementation, e-mail address change is made in the step of modifying the PAI. However, in some other implementation, not only e-mail address change, but also the network address and terminal name included in the profile information may be changed. A plurality of virtual network addresses and terminal names may be assigned to one communications unit. In the modification step, it is possible to "change the terminal name to another virtual terminal name" and "change the network address to another virtual network address" within the profile information.

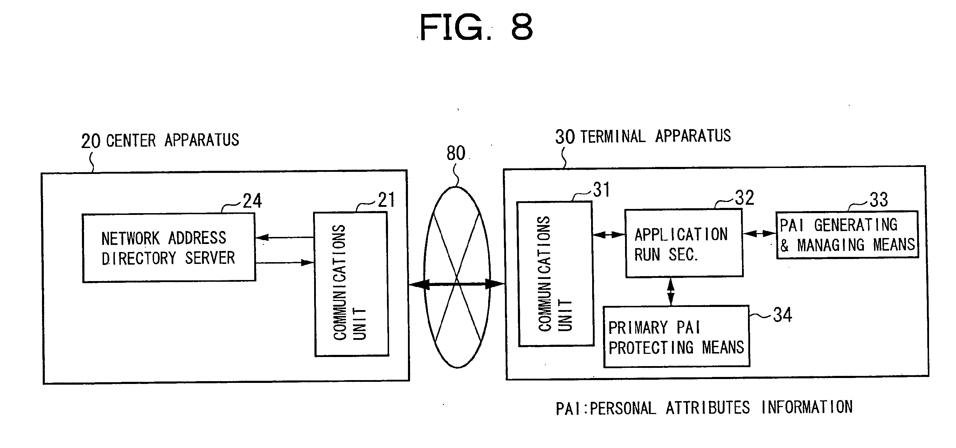

In this case, as is shown in FIG. 8, the center apparatus 20 includes a network address directory server 24 which assigns a plurality of virtual network addresses and terminal names to one communications unit and forwards access from any device on the network to the network address and terminal name specified within the access request. The terminal apparatus is equipped with the communications unit 31 that may have a plurality of pairs of a network address such as, for example, an IP address and a machine name, virtually.

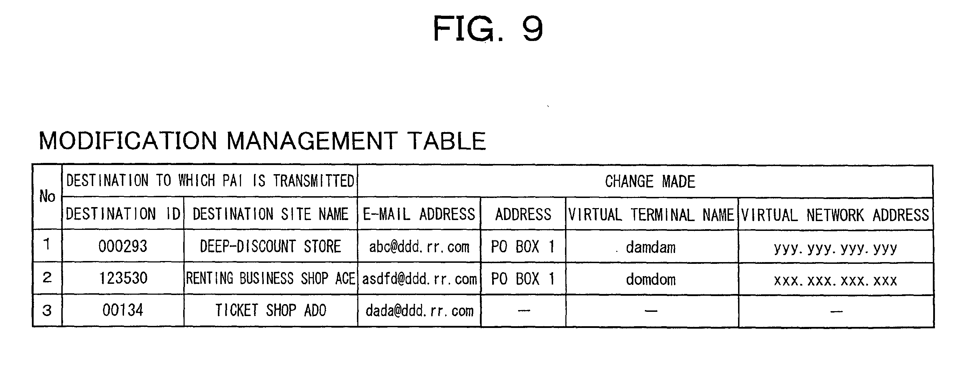

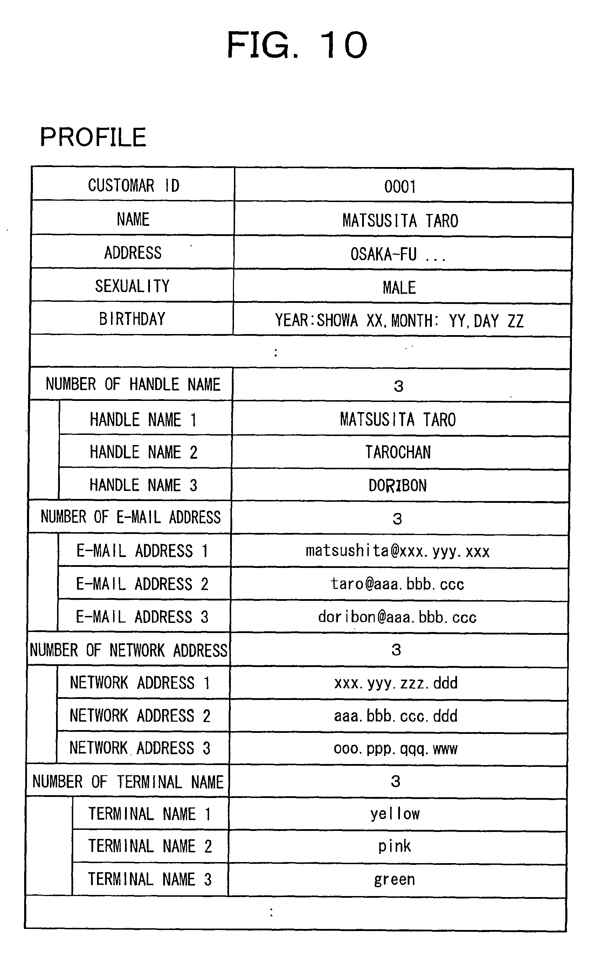

In consequence, the profile information table of the customer's attributes information would alter, as is illustrated in FIG. 10, a plurality of network addresses and terminal names that have been pre-assigned are registered in the table. In the case, where the means for modifying PAI 341 modifies the customers attributes information, including change to the terminal name and network address, the "modification management table" alters as is illustrated in FIG. 9.

While the illustrative case where the customer accesses an EC system and buys some content or commodity was discussed in this section of Embodiment 1, the method of Embodiment 1 can widely apply to situations where a person is requested to disclose his or her personal information on the network; e.g., when the person is prompted to register with a party or organization that offers some commercial service on the network or fill out a questionnaire on a site thereof.

In the disclosed system for protecting PAI, a temporary point of contact (e-mail address) of a customer is told to a person whom the customer got to know on the net, but does not see him or her or a commercial Internet service provider. Once the customer's personal information has been disclosed to such person or service provider, it is impossible to prevent the information leak. However, even if the customer's personal information has been leaked out, defensive action can be taken promptly by discarding the temporary point of contact without changing the point of contact in ordinary use. The leaker and getter of the customer's personal information would know that who leaked out the information is traceable and the customer's point of contact that they got dishonestly cannot be used effectively. Therefore, they would realize that such information leaks are worthless. In consequence, leaks of personal information can be inhibited.

### (Second Embodiment)

According to a preferred Embodiment 2 of the present invention, a system for protecting PAI is intended to protect personal information by imposing conditions on using the personal information to be disclosed. This system for protecting PAI will now be described.

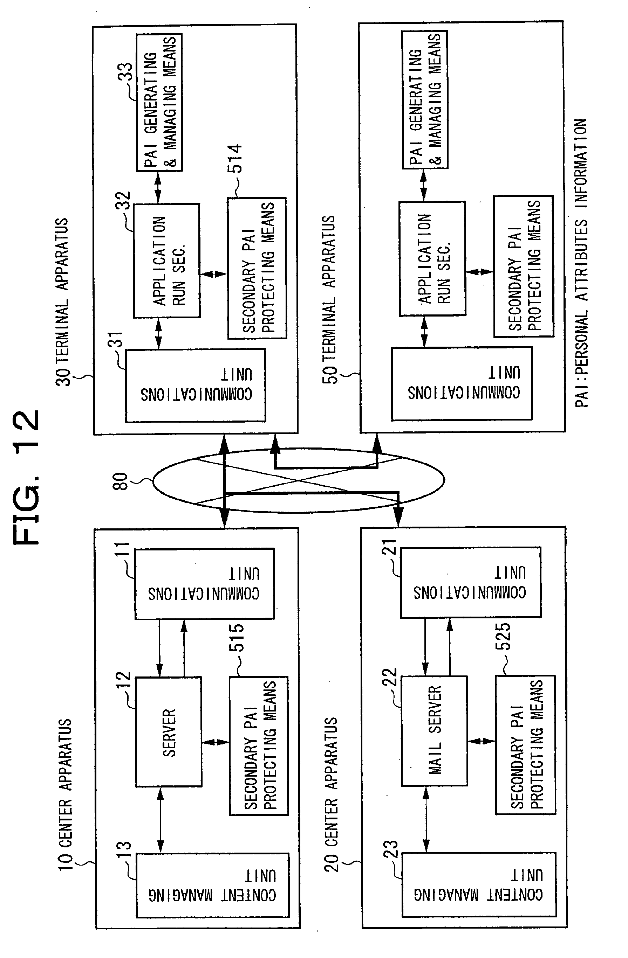

As is shown in FIG. 12, center apparatuses 10 and 20 which are constituent parts of this system respectively include secondary PAI protecting means 515 and 525 that control the use of PAI subject to conditions imposed on using the PAI.

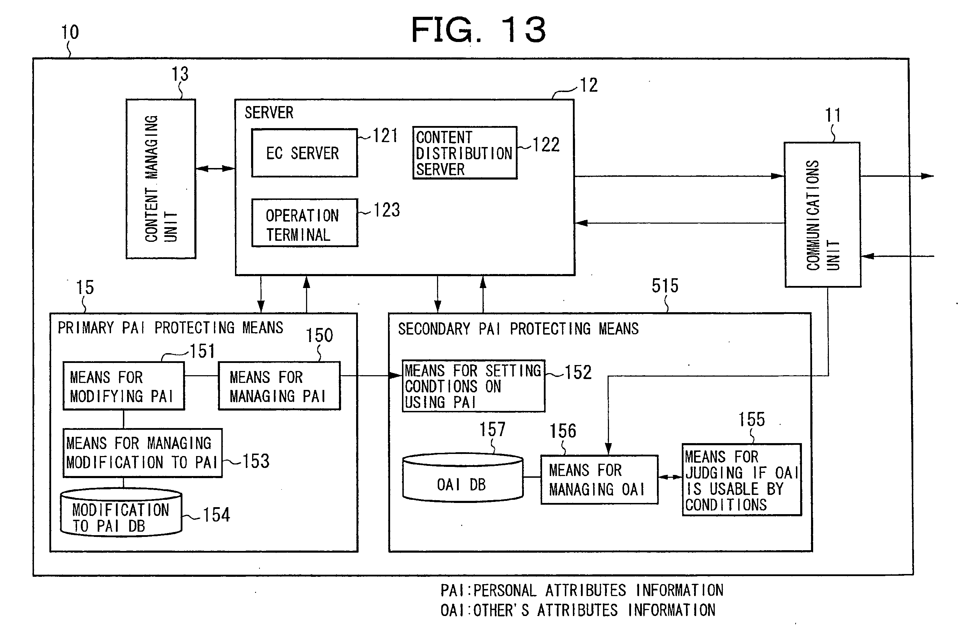

FIG. 13 shows a detailed configuration of a center apparatus 10. Here, in addition to the secondary PAI protecting means 515, a primary PAI protecting means 15, which was described in the Embodiment 1 section, is also provided in the center apparatus. In this arrangement, the center apparatus can modify, if necessary, the information about the attributes of content managed by it and the service provider's attributes to be sent out from it.

The server 12 portion of the center apparatus includes an EC server 121 to offer EC services and a content distribution server 122 to offer content distribution services. These servers 121 and 122 offer services in a manner that service implementation makes good use of customers' attributes information. The server 12 portion also includes an operation terminal 123 for the servers 121 and 122.

The secondary PAI protecting means 515 comprises the following: a means for managing others' attributes information (abbreviated to OAI, hereinafter) 156 to manage OAI that is used conditionally, received from the external; OAI DB 157 in which received OAI is stored; a means for judging if OAI is usable by conditions 155 to judge if OAI is usable by the conditions of using the OAI when making use of the OAI; a means for setting conditions on using PAI 152 to set conditions on using PAI when the center apparatus 10 is sending the information about the attributes of content to be distributed by it and other information out to the external.

The primary PAI protecting means 15 comprises the following: a means for managing PAI 150 to manage the information about the attributes of content to be distributed by the center apparatus 10 and the service provider's attributes; a means for modifying PAI 151 to modify the above attributes information, if necessary; a means for managing modification to PAI 153 to manage the modification to the PAI; and a modification to PAI DB 154 in which the modification to the PAI is stored. These means effect the same functions as described in the Embodiment 1 section.

The communications unit 11 screens received data to set OAI apart and passes the OAI to the means for managing OAI 156 within the secondary PAI protecting means 515.

The functions of the above constituent parts of the center apparatus are implemented by making the internal computer of the center apparatus perform processing steps coded by a program.

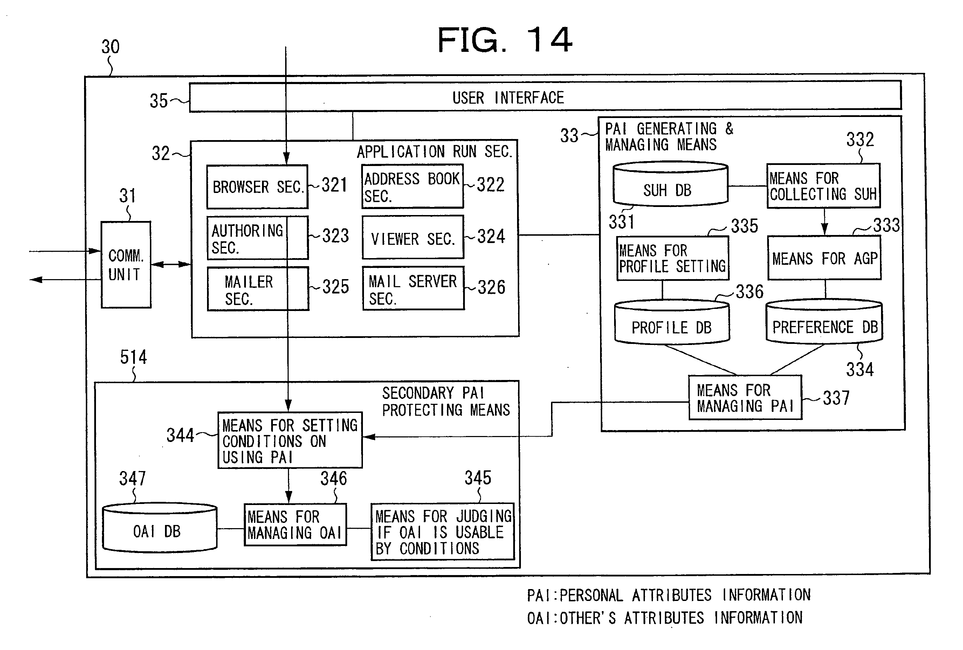

As is shown in FIG. 14, the secondary PAI protecting means 534 of the terminal apparatus 30 comprises the following: a means for setting conditions on using PAI 344 to manage conditions to be set on using PAI, set conditions on PAI, and attach the conditions to the PAI to be sent out; a means for managing OAI 346 to manage OAI that is used conditionally, received from the external; OAI DB 347 in which received OAI is stored; and a means for judging if OAI is usable by conditions 345 to judge if OAI is usable by the conditions of using the OAI when making use of the OAI. Other constituent parts of the terminal apparatus 30 are the same as the corresponding ones of the terminal apparatus in Embodiment 1.

The functions of the constituent parts of the terminal apparatus are implemented by making the internal computer of the terminal apparatus perform processing steps coded by a program.

Then, the operation of the system of Embodiment 2 will be described.

First, how the terminal apparatus 30 operates to set conditions on using PAI and transmit the PAI to be used conditionally to a site it accessed on the network will be explained.

The customer, or the terminal user specifies in advance conditions on using his or her attributes information to be sent out, using the browser. The specified conditions are passed to the means for setting conditions on using PAI 344.

The customer, or the terminal user may specify, for example, the following conditions to be set on using PAI:
- Transfer to a third party
   Whether or not it is acceptable to disclose the PAI transmitted from the customer's terminal apparatus to a third party can be specified. If disclosing the PAI to a third party is acceptable, a third party, only to which the PAI may be disclosed, can be specified. Disclosure of the PAI to a third party can be conditioned by accent of the owner of the PAI in advance by referring to its terminal.
- Valid period of use
   For example, the period of using PAI can be limited to one week after the PAI is disclosed.
- Maximum number of times of use
   For example, a maximum number of times of using PAI can be limited to three times after the PAI is disclosed.
- Application software limitation

Application types such as, for example, a mailer and scheduler or a particular software package designation on which cutting and pasting of PAI may be performed can be specified.

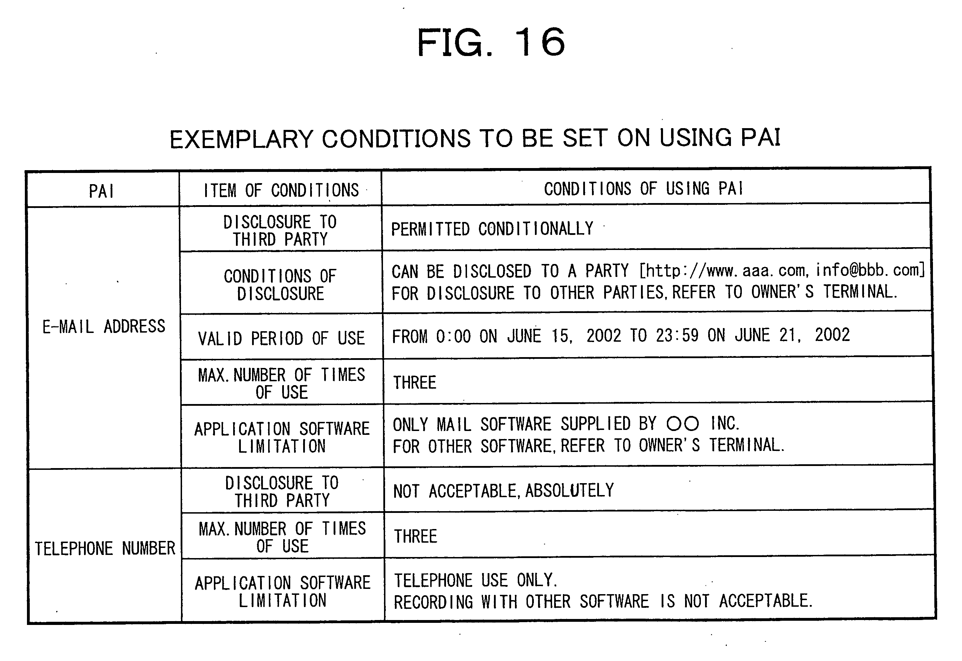

FIG. 16 shows a table listing exemplary conditions set on using PAI.

After making the conditions on using PAI in this way, the customer accesses an EC site and decides to buy some content or commodity. The customer enters necessary items (for example, the commodity to buy and its quantity) except his or her PAI and presses or clicks the Submit button or the like.

Then, the internal components of the terminal apparatus 30 perform the following steps of processing.
(1) The browser section 321 sends a request for setting conditions on using PAI to the means for setting conditions on using PAI 344 within the secondary PAI protecting means 534.
(2) When the means for setting conditions on using PAI 344 receives the request for setting conditions on using PAI, it sends a request for retrieving the customer's attributes information to the means for managing PAI 337.
(3) The means for managing PAI 337 retrieves the customer's profile and preference information from the profile DB 336 and the preference DB 334 and sends that information to the means for setting conditions on using PAI 344.
(4) The means for setting conditions on using PAI 344 attaches the conditions of using PAI that was made beforehand to the customer's attributes information and returns the PAI that is used conditionally to the browser section 321.
(5) The browser section 321 transmits the PAI to be used conditionally to the destination site via the communications unit 31.

In the step of (4), instead of attaching the pre-specified conditions of using PAI, the means for setting conditions on using PAI 344 allows the customer to specify conditions on the instant via the browser 31.

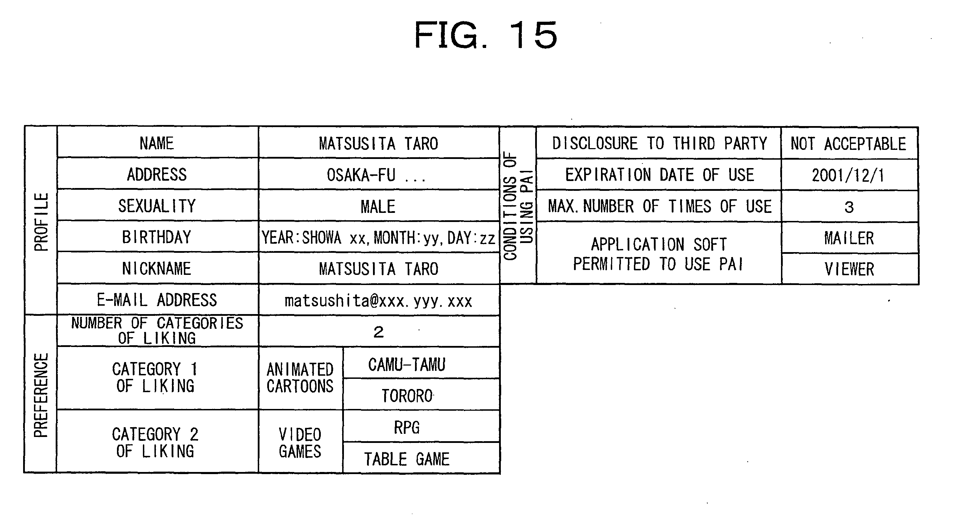

FIG. 15 shows a table listing exemplary PAI to which exemplary conditions of using the PAI are attached. Here, as the conditions, disclosure to a third party is not acceptable, an expiration date of use and the maximum number of times of use are set, and only a mailer and a viewer are permitted to use the PAI.

The PAI, or customer's attributes information may be encrypted into a form that can be decrypted by the PAI protecting means of the apparatus to which the PAI is transmitted.

Then, how the center apparatus operates upon the reception of the PAI to be used conditionally.

The communications unit 11 of the center apparatus 10 checks data received from a terminal apparatus and judges whether the data is PAI. If the received data is PAI, the communications unit sends it to the means for managing OAI 156 within the secondary PAI protecting means 515. The means for managing OAI 156 stores the received PAI into the OAI DB 157 and manages it as OAI.

On the operation terminal 123 that is for the specific types of servers 121 and 122, the service provider uses customers' attributes information received from the customers. For example, for a customer that submitted a purchase order for a commodity on the service provider's EC site, an invoice for the commodity is written and transmitted in e-mail from the center apparatus run by the service provider.

At this time, the internal components of the center apparatus 10 perform the following steps of processing.
(1) The mailer section called on the operation terminal 123 sends a request for retrieving the orderer's attributes information to the means for managing OAI 156 within the secondary PAI protecting means 515.
(2) The means for managing OAI 156 retrieves OAI corresponding to the orderer's attributes (the OAI matching with the orderer identifier) from the OAI DB 157 and sends the OAI with a request for judging if it is usable by the conditions of using it, to the means for judging if OAI is usable by conditions 155.
(3) The means for judging if OAI is usable by conditions 155 checks the conditions set on using the OAI, attached to the OAI, and judges if the OAI should be passed to the mailer section.
   For example, if the conditions exemplified in FIG. 15 are attached to the OAI, and if the current day is 2001/10/1, which is before the expiration date of use, and the OAI is used on the first occasion, which is less than the specified maximum number of times of use, the customer "Matsushita Taro's" attributes information should be passed to the mailer permitted to use the information, as all the conditions are satisfied.
(4) The means for judging if OAI is usable by conditions 155 checks the conditions set on using the OAI for every OAI it received and returns only the OAI that can be used within the mailer section to the means for managing OAI 156.
   At this time, the maximum number of times of use, if set for OAI, is decremented by one.
(5) The means for managing OAI 156 passes the OAI returned from the means for judging if OAI is usable by conditions 155 to the mailer section on the operation terminal 23.

In consequence, on the operation terminal 123, customer's attributes information can be used only if the conditions of using the information are satisfied.

The means for managing OAI 156 discards periodically or non-periodically OAI for which the expiration date of use has passed or the maximum number of times of use is 0.

It is also preferable that, when OAI is output from the secondary PAI protecting means 515, the means for managing OAI 156 sends the customer to which the OAI belongs a notification that the customer's attributes information is used.

The same processing as described for the center apparatus is performed in the terminal apparatus 30 that has, similarly, the communications unit 30 and the secondary PAI protecting means 534. Thus, on the terminal apparatus 30 also, OAI can be used only if the conditions of using it, attached to it, are satisfied.

As is the case for the terminal apparatus 30, on the center apparatus 10, the following also can be performed. The means for setting conditions on using PAI 152 sets conditions on using the information about the attributes of content and the service provider's attributes, which are managed by the means for managing PAI 150, and attaches the conditions to the above information to be sent out.

In the system for protecting PAI of Embodiment 2, even if customer's attribute information is passed to others, its use can be restricted by setting conditions on using it in the way described, and accordingly, protecting the PAI can be achieved.

### (Third Embodiment)

According to a preferred Embodiment 3 of the present invention, a system is built in which, when content created by a user is sent out from the user terminal over the network, conditions can be set on using the content, and this system will now be described.

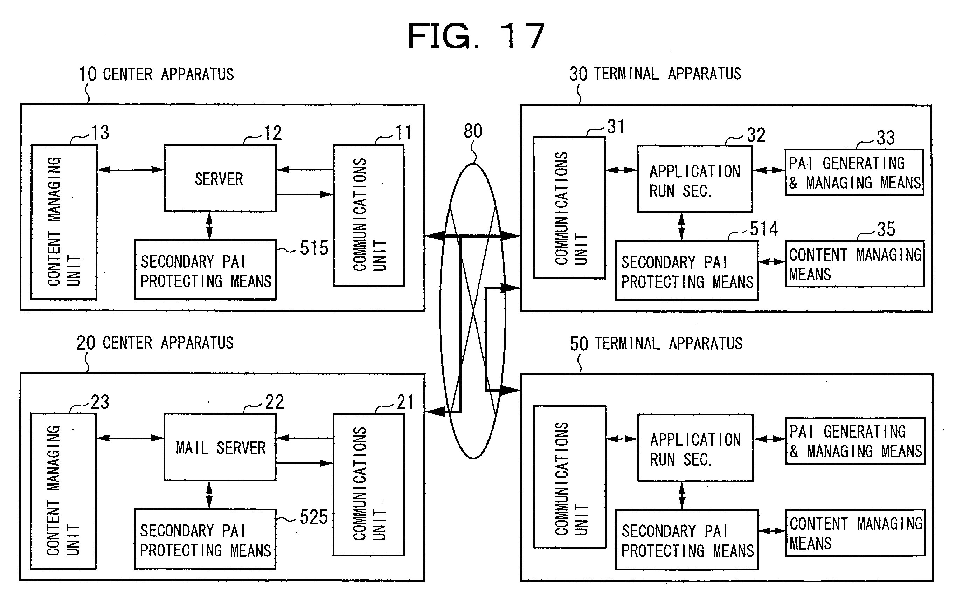

As is shown in FIG. 17, terminal apparatuses 30 and 50 which are constituent parts of this system include a content managing means 35.

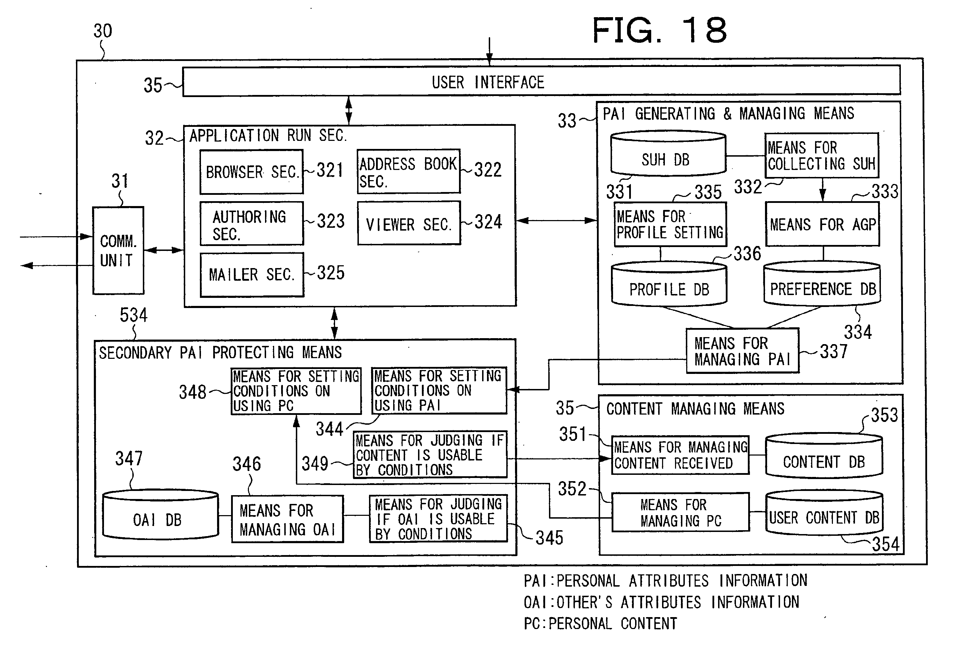

FIG. 18 shows a further detailed configuration of the terminal apparatus 30. The content managing means 35 comprises the following: a means for managing content received 351 to manage content received from the external; a content DB 353 in which received content is stored; a means for managing personal content 352 to manage personal content created in the authoring section 323 or the like; and a user content DB 354 in which personal content is stored. The personal content includes content that was authored and edited in the authoring section 323 when a content received from another party was judged "permitted for secondary use".

The secondary PAI protecting means 534 comprises: a means for setting conditions on using PAI 344; a means for managing OAI 346; an OAI DB 347; a means for judging if OAI is usable by conditions 345; and, moreover, a means for setting conditions on using personal content 348 to manage conditions to be set on using personal content, set conditions on using personal content, and attach the conditions to the personal content to be sent out; and a means for judging if content is usable by conditions 349 to judge if content is usable by the conditions set on using the content received when using the received content.

The configuration of the terminal apparatus 50 is the same as described for the terminal apparatus 30.

In this system, the terminal user specifies, in advance, conditions on using personal content created by the user (including user-edited content of secondary use). The specified conditions are passed to the means for setting conditions on using personal content 348. What conditions can be specified are the same as the exemplary conditions to be set on using PAI exemplified in the Embodiment 2 section (see FIG. 16).

When personal content managed by the means for managing personal content 352 is transmitted from the terminal apparatus to another terminal apparatus, the means for setting conditions on using personal content 348 sets the pre-specified conditions on using the personal content.

When the destination terminal apparatus receives the personal content to be used conditionally, its means for managing content received 351 manages the received content. When the received content is used, the means for judging if content is usable by conditions 349 judges if the content is usable by the conditions set on using it, attached to it, and enables its use so long as the conditions permit.

The system for protecting PAI of Embodiment 3, even if content (video, audio, picture, text, etc.) created by the terminal user (including user-edited content of secondary use) is passed to others, its use can be restricted by setting conditions on using it in the way described, and accordingly, protecting the content can be achieved.

Furthermore, it may be possible to embody the essential parts of the present invention as will be described below.

A terminal apparatus includes a PAI managing means to generate and manage customer's attributes information and a PAI protecting means to modify changeable items of the customer's attributes information to be transmitted to a destination across a network in such a manner as to make different changes of the items for different destinations.

A terminal apparatus includes a PAI managing means to generate and manage customer's attributes information and a PAI protecting means to set conditions on using the customer's attributes information to be transmitted to a destination across a network. At least part of the customer's attributes information is profile information which includes customer's e-mail address, name, and address information.

At least part of the customer's attributes information is preference information which includes information about customer's liking.

The profile information includes a plurality of e-mail addresses of the customer.

The profile information includes a plurality of handle names of the customer.

The profile information includes a plurality of network addresses.

The profile information includes a plurality of terminal names of the terminal apparatus the customer uses.

The primary PAI protecting means includes a means for modifying PAI to modify the customer's attributes information, subject to the preset conditions of modifying PAI.

The conditions of modifying PAI are the levels of trustworthiness assigned to all sites to which the customer's PAI is to be transmitted, by which whether PAI should be modified is determined.

In the process of modification to PAI, the means for modifying PAI selects one of the plurality of e-mail addresses of the customer included in the profile information as the e-mail address to be included in the PAI to be transmitted to a destination.

In the process of modification to PAI, the means for modifying PAI selects one of the plurality of handle names of the customer included in the profile information as the handle name to be included in the PAI to be transmitted to a destination.

In the process of modification to PAI, the means for modifying PAI changes the e-mail address of the customer included in the profile information to a newly set e-mail address.

In the process of modification to PAI, the means for modifying PAI changes the handle name of the customer included in the profile information to a newly set handle name.

In the process of modification to PAI, the means for modifying PAI selects one of the plurality of network addresses included in the profile information as the network address to be included in the PAI to be transmitted to a destination.

In the process of modification to PAI, the means for modifying PAI selects one of the plurality of terminal names included in the profile information as the terminal name to be included in the PAI to be transmitted to a destination.

A terminal apparatus includes a mailer section that downloads, at a time, arrived e-mail messages addressed to all e-mail addresses included in the customer's attributes information.

The primary PAI protecting means includes a means for managing modification to PAI to manage the changes made to the changeable items of the customer's attributes information as the PAI for each destination to which the PAI is transmitted.

The secondary PAI protecting means include: a means for setting conditions on using PAI to manage conditions of using customer's attributes information as PAI for restricted use by its recipient, set conditions on using the PAI, and attach the conditions to the PAI to be transmitted to a destination; a means for managing OAI to store and manage OAI that is used conditionally, received from the external; and a means for judging if OAI is usable by conditions to judge whether to use received OAI by the conditions set on using the OAI.

The conditions to be specified and set on using PAI include the following: whether transferring PAI to a third party is acceptable, a valid period of use of PAI, and an application method permitted for using PAI.

A terminal apparatus is equipped with the communications unit which passes OAI it received to the means for managing OAI within the secondary PAI protecting means.

The means for managing OAI repudiates a request for using OAI it manages if the requested use of the OAI does not fulfill the conditions set on using the OAI.

The means for managing OAI may discard OAI it manages, subject to the conditions set on using the OAI.

The means for managing OAI, when delivering OAI it manages out of the secondary PAI protecting means, notifies the customer to which the OAI belongs that the OAI is used.

A terminal apparatus includes: a content managing means to manage content received from the external and content created by the terminal user separately; a means for setting conditions on using personal content to manage conditions of using content created by the terminal user for restricted use of the content by its recipient, set conditions on using such content, and attach the conditions to the content to be transmitted to a destination; and a means for judging if content is usable by conditions to judge whether to use received content by the conditions set on using the received content, attached to the content.

A center apparatus includes the communications unit which passes OAI it received to the means for managing OAI within the secondary PAI protecting means.

The means for managing OAI repudiates a request for using OAI it manages if the requested use of the OAI does not fulfill the conditions set on using the OAI.

The means for managing OAI may discard OAI it manages, subject to the conditions set on using the OAI.

The means for managing OAI, when delivering OAI it manages out of the secondary PAI protecting means, notifies the customer to which the OAI belongs that the OAI is used.

As is evident from the embodiments described hereinbefore, the system, apparatus, and computer program for protecting PAI that the present invention provides makes it possible to inhibit unauthorized use of personal information and content which are disclosed on the network and protect such information and content disclosed.

As a result, the present invention can facilitate the proper development of a network and system and realize smooth operation thereof.

While the present invention was described hereinbefore with reference to its preferred embodiments shown in the accompanying drawings, it will be appreciated for those skilled in the art to which the invention pertains that the invention can easily be modified or altered. The invention is intended to cover alternatives, modifications, and equivalents, which may be included within the scope of the invention as delineated by the appended claims.

## Claims

1. A system for protecting personal attributes information, comprising:
a terminal apparatus including a personal attributes information generating and managing means to generate and manage customer's attributes information, and a primary personal attributes information protecting means to modify changeable items of said customer's attributes information to be transmitted to a destination across a network in such a manner as to make different changes for different destinations; and
a center apparatus which offers services in a manner refined by making good use of said customer's attributes information received from said terminal apparatus.

2. A system for protecting personal attributes information, comprising:
a terminal apparatus including a personal attributes information generating and managing means to generate and manage customer's attributes information, and a means for setting conditions on using personal attributes information to set conditions on using said customer's attributes information and attach the conditions to said customer's attributes information to be transmitted to a destination across a network; and
a center apparatus including a server which offers services in a manner refined by making good use of said customer's attributes information received from said terminal apparatus, and a means for managing others' attributes information to restrict the use of personal attributes information received across the network, subject to the conditions set on using the personal attributes information, attached thereto.

3. A system for protecting personal attributes information, comprising:
a first terminal apparatus including a personal attributes information generating and managing means to generate and manage customer's attributes information, and a means for setting conditions on using personal attributes information to set conditions on using said customer's attributes information and attach the conditions to said customer's attributes information to be transmitted to a destination across a network; and
a second terminal apparatus including a means for managing others' attributes information to restrict the use of personal attributes information received from the first terminal apparatus across the network, subject to the conditions set on using the personal attributes information, attached thereto.

4. A terminal apparatus including:
a personal attributes information generating and managing means to generate and manage customer's attributes information containing profile information which includes customer's e-mail address, name, and address information or preference information which includes information about customer's liking; and
a primary personal attributes information protecting means to modify changeable items of said customer's attributes information to be transmitted to a destination across a network in such a manner as to make different changes for different destinations,
wherein said primary personal attributes information protecting means modifies said customer's attributes information, subject to preset conditions of modifying personal attributes information.

5. A terminal apparatus as recited in claim 4, wherein said primary personal attributes information protecting means determines whether to modify said customer's attributes information, subject to said preset conditions of modifying personal attributes information, according to the levels of trustworthiness assigned to all sites to which said customer's attributes information is to be transmitted.

6. A terminal apparatus as recited in claim 4, wherein said primary personal attributes information protecting means manages the changes made to the changeable items of the customer's attributes information for each destination to which the information is transmitted.

7. A terminal apparatus including:
a personal attributes information generating and managing means to generate and manage customer's attributes information containing profile information which includes customer's e-mail address, name, and address information or preference information which includes information about customer's liking;
a secondary personal attributes information protecting means to protect said customer's attributes information, according to conditions set on using said customer's attributes information for restricted use;
said secondary personal attributes information protecting means comprising:
a means for setting conditions on using personal attributes information to manage conditions of using said customer's attributes information for restricted use by a recipient of the information, set conditions on using said customer's attributes information, and attach the conditions to said customer's attributes information to be transmitted to a destination across a network;
a means for judging if personal attributes information received from the external is usable by the conditions set on using the information, attached thereto; and
a means for managing others' attributes information to store and manage said others' attributes information to be used conditionally, received from the external, and restrict the use of said others' attributes information, according to the judgment made by said judging means.

8. A terminal apparatus including:
a personal attributes information generating and managing means to generate and manage customer's attributes information containing profile information which includes customer's e-mail address, name, and address information or preference information which includes information about customer's liking; and
a means for setting conditions on using personal attributes information to manage conditions of using said customer's attributes information for restricted use by a recipient of the information, set conditions on using said customer's attributes information, and attach the conditions to said customer's attributes information to be transmitted to a destination across a network.

9. A terminal apparatus including:
a receiving means for receiving a person's attributes information from another terminal, the information containing profile information which includes the person's e-mail address, name, and address information or preference information which includes information about the person's liking; and
a means for judging if received person's attributes information is usable by the conditions set on using the information, attached thereto; and
a means for managing others' attributes information to store and manage received said person's attributes information to be used conditionally and restrict the use of said person's attributes information, according to the judgment made by said judging means.

10. A terminal apparatus including:
a content managing means to manage content received from the external and content created by the terminal user separately; and
a personal content protecting means to protect content, according to conditions set on using the content for restricted use;
said personal content protecting means comprising:
a means for setting conditions on using personal content to manage conditions of using content created by the terminal user for restricted use of the content by its recipient, set conditions on using the content, and attach the conditions to the content to be transmitted to a destination across a network; and
a means for judging if received content is usable by the conditions set on using the content, attached thereto,
wherein said content managing means restricts the use of received content to be used conditionally, according to the judgment made by said judging means.

11. A terminal apparatus including:
a content managing means to manage content created by the terminal user; and
a means for setting conditions on using personal content to manage conditions of using content for restricted use of the content by its recipient, set conditions on using the content, and attach the conditions to the content to be transmitted to a destination across a network.

12. A terminal apparatus including:
a content managing means to manage content received from the external;
a means for judging if the content is usable by the conditions set on using the content, attached thereto,
wherein said content managing means restricts the use of content to be used conditionally, according to the judgment made by said judging means.

13. A center apparatus including:
a secondary personal attributes information protecting means to protect customer's attributes information, according to conditions set on using the customer' s attributes information for restricted use;
said secondary personal attributes information protecting means comprising:
a means for setting conditions on using personal attributes information to manage conditions of using personal attributes information to be transmitted to a destination for restricted use by a recipient of the information, set conditions on using the personal attributes information, and attach the conditions to the personal attributes information to be transmitted to a destination across a network;
a means for judging if customer's attributes information received from the external is usable by the conditions set on using the information, attached thereto; and
a means for managing others' attributes information to store and manage said customer's attributes information to be used conditionally, received from the external, and restrict the use of said customer's attributes information, according to the judgment made by said judging means.

14. A center apparatus including:
a receiving means to receive customer's attributes information transmitted from a terminal apparatus;
a means for judging if the received customer's attributes information is usable by the conditions set on using the information, attached thereto; and
a means for managing others' attributes information to store and manage received said customer's attributes information to be used conditionally, and restrict the use of said customer's attributes information, according to the judgment made by said judging means.

15. A computer program for controlling a computer of a terminal apparatus which includes a personal attributes information generating and managing means to generate and manage customer's attributes information, said computer program causing the computer to perform the steps of:
determining whether a particular destination to which said customer's attributes information will be transmitted is recorded as a trustworthy destination within said customer's attributes information;
unless the destination is recorded as a trustworthy destination, selecting an e-mail address not in use out of a plurality of e-mail addresses recorded within said customer's attributes information or generating a new e-mail address of the customer for temporary use;
replacing the e-mail address in current use within said customer's attributes information by the selected e-mail address or the newly generated e-mail address;
if the destination is recorded as a trustworthy destination, searching for an e-mail address of the customer included in the customer's attributes information transmitted to the same destination in the past; and
replacing the e-mail address in current use within said customer's attributes information by the thus searched out e-mail address.

16. A computer program for controlling a computer of a terminal apparatus or a center apparatus, said computer program causing the computer to perform the step of:
setting conditions on using customer's or personal attributes information and attaching the conditions to the customer's or personal attributes information to be transmitted to a destination across a network.

17. A computer program for controlling a computer of a terminal apparatus or a center apparatus, said computer program causing the computer to perform the steps of:
managing personal or customer's attributes information to be used conditionally, received from the external; and
when a request is made to use received personal or customer's attributes information, judging if the requested use fulfills the conditions set on using the personal or customer's attributes information, attached thereto, and permitting the use of the personal or customer's attributes information if the conditions are fulfilled.
